(19) **Europäisches Patentamt / European Patent Office / Office européen des brevets**

(11) **EP 4 510 462 A1**

(12) **EUROPEAN PATENT APPLICATION**

(43) Date of publication:
**19.02.2025 Bulletin 2025/08**

(21) Application number: **23192181.8**

(22) Date of filing: **18.08.2023**

(51) International Patent Classification (IPC):
**H04B 7/0456** (2017.01)    **H04B 7/06** (2006.01)
**H04B 7/08** (2006.01)

(52) Cooperative Patent Classification (CPC):
**H04B 7/0874; H04B 7/0465; H04B 7/0691;
H04B 7/06952**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **SOHRABI, Foad
  Ontario (CA)**
• **DU, Jinfeng
  West Windsor (US)**

(74) Representative: **Nokia EPO representatives
Nokia Technologies Oy
Karakaari 7
02610 Espoo (FI)**

(54) **METHODS OF ANTENNA/PANEL MUTING FOR MIMO SYSTEMS**

(57) A network node may generate an initial precoder for a plurality of antennas, determine antenna radiated power for each of the plurality of antennas based on the initial precoder, select a subset of antennas from the plurality of antennas based on the determined antenna radiated power, generate at least one transmission precoder for at least one selected antenna of the selected subset of antennas, and perform communication with at least one user equipment device using the at least one transmission precoder and the at least one selected antenna of the selected subset of antennas.

Antenna/Panel Selection

CSI

$H$

S301) Construct an initial precoder for the high-dimensional channel → S302) Calculate $N$ antenna/panel radiated powers for the high-dimensional initial precoder → S303) Select $L < N$ antennas/panels corresponding to the largest radiated powers → S304) Generate a TX precoder for the selected $L$ data antennas/panels transmission

**Fig. 3**

**Description**

**RELATED FIELD**

Various example embodiments relate to methods, apparatuses, systems, and/or non-transitory computer readable media for performing antenna and/or panel muting for multiple-input and multiple-output (MIMO) systems and/or extreme (or massive) MIMO (eMIMO or mMIMO) systems.

**BACKGROUND**

The 3rd Generation Partnership Project (3GPP) 5th generation mobile network (5G) standard, referred to as 5G New Radio (NR), is being developed to provide higher capacity, higher reliability, and lower latency communications than the 4G long term evolution (LTE) standard.

With the rollout of 5G NR mobile networks by wireless network operators and a corresponding increase in 5G-capable user equipment (UE) devices using a fixed spectrum of radio frequencies, wireless network operators have seen in an increase in the energy consumption by radio access network (RAN) nodes, e.g., base stations, cell towers, access points, and/or transmission and reception points (TRPs), and energy consumption by RAN nodes is expected to further increase with the adoption of future wireless networks, such as, but not limited to, a 6G network or a 7G network.

**SUMMARY**

At least one example embodiment is related to a network node.

In at least one example embodiment, the network node may include means for generating an initial precoder for a plurality of antennas, determining antenna radiated power for each of the plurality of antennas based on the initial precoder, selecting a subset of antennas from the plurality of antennas based on the determined antenna radiated power, generating at least one transmission precoder for at least one selected antenna of the selected subset of antennas, and performing communication with at least one user equipment (UE) device using the at least one transmission precoder and the at least one selected antenna of the selected subset of antennas.

Some example embodiments provide that the network node further includes means for, obtaining signal quality measurements associated with the plurality of antennas, generating an initial channel matrix corresponding to the plurality of antennas based on the obtained signal measurements, and generating the initial precoder based on the initial channel matrix.

Some example embodiments provide that the network node further includes means for, obtaining a number of total antennas associated with the network node, obtaining a number of active antennas associated with the network node, obtaining a number of UE devices connected to the network node, and generating the initial channel matrix based on the obtained signal quality measurements, the number of total antennas, the number of active antennas, and the number of UE devices.

Some example embodiments provide that the network node further includes means for, generating the at least one transmission precoder for the at least one selected antenna of the selected subset of antennas by, determining effective signal quality measurements associated with each selected antenna of the selected subset of antennas, generating a subset channel matrix based on the determined effective signal quality measurements, and generating the at least one transmission precoder for the at least one selected antenna based on the subset channel matrix.

Some example embodiments provide that the signal quality measurements are at least one of, channel state information (CSI) associated with each of the plurality of antennas, signal interference to noise ratio (SINR) measurements associated with each of the plurality of antennas, channel quality information (CQI) associated with each of the plurality of antennas, reference signal received power (RSRP) measurements associated with each of the plurality of antennas, reference signal received quality (RSRQ) measurements associated with each of the plurality of antennas, received signal strength indication (RSSI) measurements associated with each of the plurality of antennas, or any combinations thereof.

Some example embodiments provide that the network node further includes means for selecting the subset of antennas from the plurality of antennas by, selecting a desired number of antennas from the plurality of antennas as the selected subset of antennas based on the determined antenna radiated power of the plurality of antennas, wherein the desired number of antennas is a configurable network setting.

Some example embodiments provide that the network node further includes means for selecting the subset of antennas from the plurality of antennas by, selecting the desired number of antennas having highest antenna radiated power from the determined antenna radiated power of the plurality of antennas as the selected subset of antennas.

Some example embodiments provide that the initial precoder and the at least one transmission precoder are digital precoders.

Some example embodiments provide that the digital precoders are at least one of, a zero-forcing (ZF) precoder, a regularized ZF (RZF) precoder, a weighted minimum mean-square error (WMMSE) precoder, eigen ZF (EZF) precoder, or any combinations thereof.

Some example embodiments provide that the initial precoder and the at least one transmission precoder are hybrid analog-digital precoders.

Some example embodiments provide that the hybrid analog-digital precoders are at least one of, a fully-connected (FC)-phase shifter (PS) precoder, a partially-connected (PC)-PS precoder, or a combination thereof.

Some example embodiments provide that the network node further includes means for communicating with the at least one UE device using a single carrier, and generating a single transmission precoder for the at least one selected antenna of the selected subset of antennas based on the single carrier.

Some example embodiments provide that the network node further includes means for, communicating with the at least one UE device using a plurality of carriers or a plurality of subcarriers, generating the plurality of initial precoders for the plurality of antennas for each of the plurality of carriers or the plurality of subcarriers, determining the antenna radiated power for each of the plurality of antennas based on the plurality of initial precoders, selecting a desired number of antennas from the plurality of antennas as the selected subset of antennas for at least one carrier of the plurality of carriers or at least one subcarrier of the plurality of subcarriers based on the determined antenna radiated power, and generating a plurality of transmission precoders for the at least one selected antenna of the selected subset of antennas based on the plurality of carriers or the plurality of subcarriers.

Some example embodiments provide that the network node further includes means for, generating the at least one transmission precoder within a per channel coherence time.

Some example embodiments provide that the means includes memory having computer readable instructions stored thereon, and processing circuitry configured to execute the computer readable instructions to cause the performance of the network node.

At least one example embodiment is related to a method of operating a network node.

In at least one example embodiment, the method may include, generating an initial precoder for a plurality of antennas, determining antenna radiated power for each of the plurality of antennas based on the initial precoder, selecting a subset of antennas from the plurality of antennas based on the determined antenna radiated power, generating at least one transmission precoder for at least one selected antenna of the selected subset of antennas, and performing communication with at least one user equipment (UE) device using the at least one transmission precoder and the at least one selected antenna of the selected subset of antennas.

Some example embodiments provide that the method further includes, obtaining signal quality measurements associated with the plurality of antennas, generating an initial channel matrix corresponding to the plurality of antennas based on the obtained signal measurements, and generating the initial precoder based on the initial channel matrix.

Some example embodiments provide that the method further includes, obtaining a number of total antennas associated with the network node, obtaining a number of active antennas associated with the network node, obtaining a number of UE devices connected to the network node, and generating the initial channel matrix based on the obtained signal quality measurements, the number of total antennas, the number of active antennas, and the number of UE devices.

Some example embodiments provide that the generating the at least one transmission precoder for the at least one selected antenna of the selected subset of antennas further includes, determining effective signal quality measurements associated with each selected antenna of the selected subset of antennas, generating a subset channel matrix based on the determined effective signal quality measurements, and generating the at least one transmission precoder for the at least one selected antenna based on the subset channel matrix.

Some example embodiments provide that the selecting the subset of antennas from the plurality of antennas further includes, selecting a desired number of antennas from the plurality of antennas as the selected subset of antennas based on the determined antenna radiated power of the plurality of antennas, wherein the desired number of antennas is a configurable network setting.

Some example embodiments provide that the selecting the subset of antennas from the plurality of antennas further includes selecting the desired number of antennas having highest antenna radiated power from the determined antenna radiated power of the plurality of antennas as the selected subset of antennas.

At least one example embodiment is related to a network node.

In at least one example embodiment, the network node may include a memory storing computer readable instructions, and processing circuitry configured to execute the computer readable instructions to cause the network node to, generate an initial precoder for a plurality of antennas, determine antenna radiated power for each of the plurality of antennas based on the initial precoder, select a subset of antennas from the plurality of antennas based on the determined antenna radiated power, generate at least one transmission precoder for at least one selected antenna of the selected subset of antennas, and perform communication with at least one user equipment (UE) device using the at least one transmission precoder and the at least one selected antenna of the selected subset of antennas.

Some example embodiments provide that the network node is further caused to, obtain signal quality measurements associated with the plurality of antennas, generate an initial channel matrix corresponding to the plurality of antennas based on the obtained signal measurements, and generate the initial precoder based on the initial channel matrix.

Some example embodiments provide that the network node is further caused to, obtain a number of total antennas associated with the network node, obtain a number of active antennas associated with the network node, obtain a number of UE devices connected to the network node, and generate the initial channel matrix based on the obtained signal quality measurements, the number of total antennas, the number of active antennas, and the number of UE devices.

Some example embodiments provide that the network node is further caused to generate the at least one transmission precoder for the at least one selected antenna of the selected subset of antennas by, determining effective signal quality measurements associated with each selected antenna of the selected subset of antennas, generating a subset channel matrix based on the determined effective signal quality measurements, and generating the at least one transmission precoder for the at least one selected antenna based on the subset channel matrix.

Some example embodiments provide that the signal quality measurements are at least one of channel state information (CSI) associated with each of the plurality of antennas, signal interference to noise ratio (SINR) measurements associated with each of the plurality of antennas, channel quality information (CQI) associated with each of the plurality of antennas, reference signal received power (RSRP) measurements associated with each of the plurality of antennas, reference signal received quality (RSRQ) measurements associated with each of the plurality of antennas, received signal strength indication (RSSI) measurements associated with each of the plurality of antennas, or any combinations thereof.

Some example embodiments provide that the network node is further caused to select the subset of antennas from the plurality of antennas by, selecting a desired number of antennas from the plurality of antennas as the selected subset of antennas based on the determined antenna radiated power of the plurality of antennas, wherein the desired number of antennas is a configurable network setting.

Some example embodiments provide that the network node is further caused to select the subset of antennas from the plurality of antennas by, selecting the desired number of antennas having highest antenna radiated power from the determined antenna radiated power of the plurality of antennas as the selected subset of antennas.

Some example embodiments provide that the initial precoder and the at least one transmission precoder are digital precoders.

Some example embodiments provide that the digital precoders are at least one of, a zero-forcing (ZF) precoder, a regularized ZF (RZF) precoder, a weighted minimum mean-square error (WMMSE) precoder, eigen ZF (EZF) precoder, or any combinations thereof.

Some example embodiments provide that the initial precoder and the at least one transmission precoder are hybrid analog-digital precoders.

Some example embodiments provide that the hybrid analog-digital precoders are at least one of a fully-connected (FC)-phase shifter (PS) precoder, a partially-connected (PC)-PS precoder, or a combination thereof.

Some example embodiments provide that the network node is configured to communicate with the at least one UE device using a single carrier, and the network node is further caused to generate a single transmission precoder for the at least one selected antenna of the selected subset of antennas based on the single carrier.

Some example embodiments provide that the network node is configured to communicate with the at least one UE device using a plurality of carriers or a plurality of subcarriers, the network node is further caused to, generate the plurality of initial precoders for the plurality of antennas for each of the plurality of carriers or the plurality of subcarriers, determine the antenna radiated power for each of the plurality of antennas based on the plurality of initial precoders, and select a desired number of antennas having highest antenna radiated power from determined antenna radiated power of the plurality of antennas as the selected subset of antennas, and the network node is further caused to generate a plurality of transmission precoders for the at least one selected antenna of the selected subset of antennas based on the plurality of carriers or the plurality of subcarriers.

Some example embodiments provide that the network node is further caused to generate the at least one transmission precoder within a per channel coherence time.

At least one example embodiment is related to a non-transitory computer readable medium.

In at least one example embodiment, the computer readable medium may have computer readable instructions stored thereon, which when executed by processing circuitry, cause the processing circuitry to, generate an initial precoder for a plurality of antennas, determine antenna radiated power for each of the plurality of antennas based on the initial precoder, select a subset of antennas from the plurality of antennas based on the determined antenna radiated power, generate at least one transmission precoder for at least one selected antenna of the selected subset of antennas, and perform communication with at least one user equipment (UE) device using the at least one transmission precoder and the at least one selected antenna of the selected subset of antennas.

## BRIEF DESCRIPTION OF THE DRAWINGS

The accompanying drawings, which are incorporated in and constitute a part of the specification, illustrate one or more example embodiments and, together with the description, explain these example embodiments. In the drawings:

FIG. 1 illustrates a wireless communication system according to at least one example embodiment;

FIG. 2 illustrates a block diagram of an example network node according to at least one example embodiment;

FIG. 3 is an example flowchart illustrating a method of performing antenna and/or panel muting according to some example embodiments;

FIG. 4 is an example graph illustrating the selection of the subset of antennas (or panels) according to at least one example embodiment;

FIGS. 5A to 5E are example comparison graphs illustrating the performance of at least one example embodiment in comparison to conventional antenna selection algorithms; and

FIGS. 6A to 6B are another example comparison graphs illustrating the performance of at least one example embodiment in comparison to a conventional antenna selection algorithm with respect to transmissions over multiple subbands.

## DETAILED DESCRIPTION

Various example embodiments are directed towards performing increased energy efficient (EE) and/or spectral efficient (SE) antenna and/or panel muting for multiple-input and multiple-output (MIMO) systems and/or extreme (or massive) MIMO (eMIMO or mMIMO) systems.

To reduce energy consumption of wireless networks and/or to increase the spectral efficiency of wireless networks to accommodate an increasing number of UE devices, mobile network operators (MNOs) have started to implement antenna/antenna panel/transmitter chain (TRX) selection techniques (also referred to as antenna/antenna panel/TRX muting techniques) (hereinafter, collectively referred to as antenna selection techniques) for MIMO systems and/or mMIMO systems, particularly with regards to time periods where the wireless network system experiences less than peak load and/or less than peak traffic. As will be readily apparent, wireless network nodes, such as RAN nodes, base stations, cell towers, access points, TRPs, and so on, are designed to have enough antenna transmission and/or reception capacity to support a desired peak load/peak traffic, and operating all of the antenna capacity of the wireless network nodes during periods of non-peak load and/or non-peak traffic will result in wasted energy consumption. Accordingly, techniques for implementing antenna selection on wireless network nodes have been implemented in order to mute one or more antennas (e.g., not operate and/or not select antennas) that may not be desired and/or required to handle the non-peak load and/or non-peak traffic to increase energy efficiency of the wireless network node.

However, when computationally efficient conventional antenna selection techniques, such as antenna selection techniques based on heuristic selection metrics and/or greed-based selection algorithms (e.g., highest channel gains antenna selection algorithm, regular muting pattern antenna selection algorithm, random muting antenna selection algorithm) are applied to multi-user MIMO wireless networks and/or mMIMO wireless networks, the conventional antenna selection techniques provide inefficient performance (e.g., decreased data transmission rates) and/or inefficient spectral efficiency (e.g., decreased radio spectrum usage) due to inter-user interference and/or inter-layer interference. Moreover, while more sophisticated conventional antenna selection techniques, such as machine-learning (ML) based antenna selection techniques, may take into consideration inter-user interference and/or inter-layer interference when calculating the antenna selection of a wireless network node, the more sophisticated conventional antenna selection techniques are computationally intensive, and, therefore, expensive, and antenna selection may require a larger amount time to complete. Accordingly, the more sophisticated conventional antenna selection techniques, such as the ML-based antenna selection algorithms, may be undesirable and/or unsuitable for wireless networks with higher quality of service (QoS) and/or other design constraints, e.g., performance of antenna selection within short time scales, such as per-channel coherence times.

Accordingly, improved antenna selection techniques are desired to improve EE, SE, and/or computational efficiency, thereby reducing the total energy consumption of the wireless network, increasing and/or maximizing the usage of radio frequency spectrum of the wireless network, and/or performing the improved antenna selection technique within a desired time scale, such as on a per-channel coherence time scale.

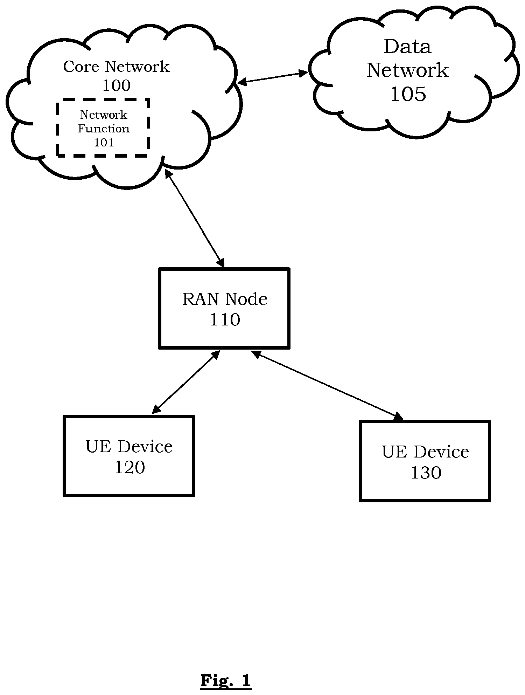

FIG. 1 illustrates a wireless communication system according to at least one example embodiment. As illustrated in FIG. 1, a wireless communication system includes a core network 100, a data network 105, at least one RAN node 110 connected to the core network 100, but the example embodiments are not limited thereto. Additionally, the wireless communication system may include a plurality of UE devices 120 and 130, which may be connected to the at least one RAN node 110 of core network 100, but are not limited thereto. Further, the core network 100 may include at least one network function 101. However, the example embodiments are not limited thereto, and the example embodiments may include a greater or lesser number of constituent elements, such as two or more core networks, a greater or lesser number of RAN nodes, a greater or lesser number of network functions, additional UE devices, additional base stations, servers, routers, access points, gateways, and so on.

The UE devices 120 and 130, the at least one RAN node 110, the core network 100, and/or the network function 101, may be connected over a wireless network, such as a cellular wireless access network (e.g., a 3G wireless access network, a 4G-Long Term Evolution (LTE) network, a 5G-New Radio (e.g., 5G) wireless network, a 6G network, a 7G network, a WiFi network). The wireless network may include the core network 100, which may each be associated with a wireless network operator, e.g., a mobile network operator (MNO), a public land mobile network (PLMN), but the example embodiments are not limited thereto. For example, the wireless communication system may include a plurality of core networks associated with a plurality of MNOs The at least one RAN node 110 may also be referred to as a network node and/or network device, and may operate as a RAN node, a base station, a cell tower, a TRP, an access point, and may connect to at least one other RAN node (not illustrated), the network function 101, the core network 100, over a wired and/or wireless network.

The UE devices 120 and 130 may be any one of, but are not limited to, a mobile device, a tablet, a laptop computer, a wearable device, an Internet of Things (IoT) device, a desktop computer and/or any other type of stationary or portable device capable of operating according to the 5G NR radio access technology (RAT) and/or other RAT implemented by the wireless communication system.

The at least one RAN node 110 may operate according to an underlying cellular and/or wireless RAT, such as, but not limited to, 5G NR, LTE, and Wi-Fi. For example, the at least one RAN node 110 may be 5G gNB nodes, LTE eNB nodes, and/or LTE ng-eNB nodes, but the example embodiments are not limited thereto. The at least one RAN node 110 may provide wireless network services to one or more UE devices, e.g., UEs 120 and/or 130, within one or more cells (e.g., cell service areas, broadcast areas, serving areas, coverage areas, and so on) surrounding the respective physical location of the at least one RAN node 110. Additionally, the at least one RAN node 110 may each provide one or more cells.

Additionally, the at least one RAN node 110 may be configured to operate in a multi-user (MU) MIMO mode and/or an mMIMO mode, wherein the at least one RAN node 110 transmits a plurality of beams (e.g., radio channels, data streams, and streams) in different spatial domains and/or frequency domains using a plurality of antennas (e.g., antenna panels, antenna elements, and an antenna array) and beamforming and/or beam steering techniques. According to some example embodiments, the at least one RAN node 110 may be implemented as a centralized MIMO system, a centralized mMIMO system, a distributed MIMO system, and/or distributed mMIMO system.

The at least one RAN node 110 may be connected to at least one core network element, such as a core network device, a core network server, access points, switches, routers, nodes, and so on, but the example embodiments are not limited thereto. The core network server and/or device may be a network function. For example, the network function 101 may be embodied as a core network server and/or device. The network function 101 may provide one or more network functions, such as an access and mobility management function (AMF), a session management function (SMF), a policy control function (PCF), a unified data management (UDM), a user plane function (UPF), an authentication server function (AUSF), an application function (AF), and/or a network slice selection function (NSSF), but the example embodiments are not limited thereto.

The core network 100 and the data network 105 may connect to each other over a wired and/or wireless network. The data network 105 may refer to the Internet, an intranet, a wide area network, and/or another type of network.

In FIG. 1, it is assumed that the UE devices 120 and 130 are located within the cell service area of the RAN node 110, but the example embodiments are not limited thereto. Further, it is assumed that the UE devices 120 and 130 are connected to, receives broadcast messages from, receives paging messages from, receives/transmits signaling messages from/to, and/or accesses the wireless network through the RAN node 110 of the core network 100, but is capable of being offloaded, handed over, load balanced, and so on, to another RAN node (not illustrated).

While certain components of a wireless communication network are illustrated as being part of the wireless communication system of FIG. 1, the example embodiments are not limited thereto, and the wireless communication network may include components other than those illustrated in FIG. 1, which are desired, necessary, and/or beneficial for operation of the underlying networks within the wireless communication system, such as access points, switches, routers, nodes, servers, gateways, and other components, units, or devices.

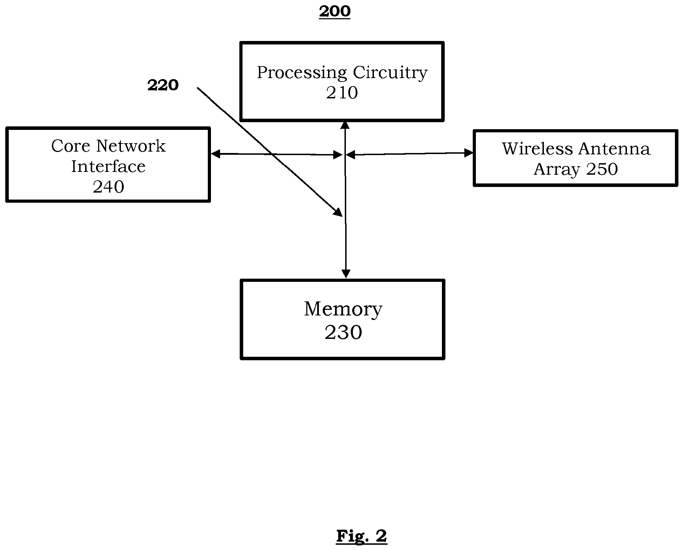

FIG. 2 illustrates a block diagram of an example network node according to at least one example embodiment. The network node of FIG. 2 may correspond to the RAN node 110 in FIG. 1, but the example embodiments are not limited thereto.

Referring to FIG. 2, a network node 200 may include processing circuitry, such as processing circuitry 210, at least one communication bus 220, a memory 230, at least one core network interface 240, and/or at least one wireless antenna array 250, but the example embodiments are not limited thereto. For example, the core network interface 240 and the wireless antenna array 250 may be combined into a single network interface, or the network node 200 may include a plurality of wireless antenna arrays, a plurality of core network interfaces, and/or any combinations thereof. The memory 230 may include various special purpose program code including computer executable instructions which may cause the network node 200 to perform the one or more of the methods of the example embodiments.

In at least one example embodiment, the processing circuitry 210 may include at least one processor (and/or processor cores, distributed processors, and networked processors), which may be configured to control one or more elements of the network node 200, and thereby cause the network node 200 to perform various operations. The processing circuitry 210 is configured to execute processes by retrieving program code (e.g., computer readable instructions) and data from the memory 230 to process them, thereby executing special purpose control and functions of the entire network node 200. Once the special purpose program instructions are loaded into the processing circuitry 210, the processing circuitry 210 executes the special purpose program instructions, thereby transforming the processing circuitry 210 into a special purpose processor.

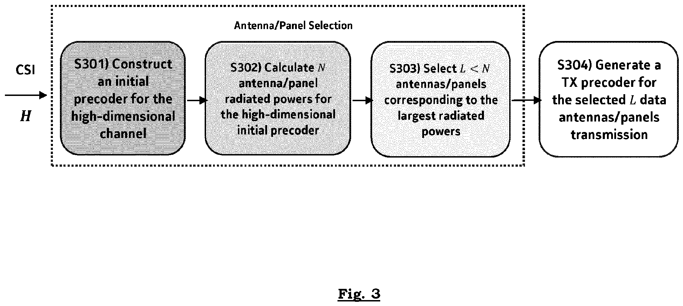

In at least one example embodiment, the memory 230 may be a non-transitory computer-readable storage medium and may include a random access memory (RAM), a read only memory (ROM), and/or a non-volatile mass storage device, such as a disk drive, and/or a solid state drive. Stored in the memory 230 is program code (e.g., computer readable instructions) related to operating the network node 200, such as the methods discussed in connection with FIGS. 3A to 3B, the at least one core network interface 240, and/or at least one wireless antenna array 250. Such software elements may be loaded from a non-transitory computer-readable storage medium independent of the memory 230, using a drive mechanism (not illustrated) connected to the network node 200, via the at least one core network interface 240, and/or at least one wireless antenna array 250.

In at least one example embodiment, the communication bus 220 may enable communication and data transmission to be performed between elements of the network node 200. The bus 220 may be implemented using a high-speed serial bus, a parallel bus, and/or any other appropriate communication technology. According to at least one example embodiment, the network node 200 may include a plurality of communication buses (not illustrated), such as an address bus, a data bus, and so on.

According to some example embodiments, the network node 200 may include a greater or lesser number of constituent components, and for example, the network node 200 may also include at least one energy harvesting device (not illustrated), such as radio frequency (RF) harvesting circuitry (e.g., back-scattering circuitry), one or more solar cells/panels, wind turbines, water turbines, heat pumps, geothermal heat pumps, kinetic energy harvesting devices and/or vibration harvesting devices, and/or at least one energy storage device (not illustrated), such as at least one battery, at least one capacitor, and so on.

When the network node 200 operates as a RAN node, for example, a 4G RAN node, a 5G RAN node, the network node 200 may be configured to schedule time domain resource allocations (TDRAs), such as, but not limited to, orthogonal frequency division multiplexing (OFDM) symbols, physical resource blocks (PRBs), and resource elements, for active and/or passive UE devices (e.g., UE devices in idle mode) and/or other nodes connected to the network node 200.

For example, the network node 200 may allocate time-frequency resources of a carrier (e.g., resource blocks with time and frequency dimensions) based on operation on the time domain (e.g., time division duplexing) and/or the frequency domain (e.g., frequency division duplexing). In the time domain context, the network node 200 will allocate a carrier (or subbands of the carrier, multiples carriers) to one or more UEs (e.g., active UE devices) and/or other nodes connected to the network node 200 during designated upload (e.g., uplink (UL)) time periods and designated download (e.g., downlink (DL)) time periods, or during designated special (S) time periods which may be used for UL and/or DL, but the example embodiments are not limited thereto.

When there are multiple UEs and/or other network nodes connected to the network node 200, the carrier is shared in time such that each UE and/or other node is scheduled by the network node 200, and the network node 200 allocates each UE and/or other node with their own uplink time and/or downlink time. In the frequency domain context and/or when performing spatial domain multiplexing of UEs and/or other nodes (e.g., MU MIMO, mMIMO), the network node 200 will allocate separate frequency subbands of the carrier to UEs and/or other network nodes simultaneously served by the network node 200, for uplink and/or downlink transmissions. Data transmission between the UE and/or other network nodes with the network node 200 may occur on a radio frame basis in both the time domain and frequency domain contexts. The minimum resource unit for allocation and/or assignment by the network node 200 to a particular UE device and/or particular other node corresponds to a specific downlink/uplink time interval (e.g., one OFDM symbol, one slot, one mini-slot, one subframe, and so on) and/or a specific downlink/uplink resource block (e.g., twelve adjacent subcarriers, a frequency subband).

According to some example embodiments, the network node 200 may further perform one or more antenna selection methods and/or antenna selection algorithms to selectively operate (and/or selectively power down or disable) a subset of a plurality of antennas/antenna panels/transmitter chains (hereinafter, collectively referred to as antennas), based on a network load and/or network traffic at the network node 200 in order to reduce the energy usage of the network node 200. According to some example embodiments, the network node 200 may perform antenna selection methods and/or antenna selection algorithms based on channel compatibility and/or channel orthogonality in order to reduce and/or minimize inter-user radio interference and/or inter-layer radio interference, thereby increasing and/or maximizing the spectral efficiency of the network node 200, improving the signal quality of the transmissions of the network node 200, and/or increasing the data transmission speeds of the network node 200. Moreover, the network node 200 may utilize antenna selection methods and/or antenna selection algorithms which support fast antenna selection and/or muting at desired time scales, such as per-channel coherence time scales. The antenna selection methods according to one or more example embodiments will be discussed in detail in connection with FIGS. 3A to 3B.

For the sake of clarity and consistency, the example embodiments will be described as using the time domain, but the example embodiments are not limited thereto. For example, the example embodiments described herein may be implemented using the time domain.

Additionally, the network node 200 may transmit scheduling information via physical downlink common channel (PDCCH) information to the one or more UE devices and/or other nodes located within the cell servicing area of the network node 200, which may configure the one or more UE devices and/or other nodes to transmit (e.g., UL transmissions via physical uplink control channel (PUCCH) information and/or physical uplink shared channel information (PUSCH)) and/or receive (e.g., DL transmissions via PDCCH and/or physical downlink shared channel information (PDSCH)) data packets to and/or from the network node 200. Additionally, the network node 200 may transmit control messages to the UE device and/or other network nodes using downlink control information (DCI) messages via, for example, physical (PHY) layer signaling, medium access control (MAC) layer control element (CE) signaling, or radio resource control (RRC) signaling.

When the network node 200 is operating as a RAN node, the network node 200 may also include at least one core network interface 240, and/or at least one wireless antenna array 250. The at least one wireless antenna array 250 may include an associated array of radio units (not illustrated) and may be used to transmit the wireless signals in accordance with a radio access technology, such as 4G LTE wireless signals, 5G NR wireless signals, to one or more UE devices, e.g., UE device 120 and/or UE device 130. According to some example embodiments, the wireless antenna array 250 may be a single antenna, or may be a plurality of antennas. For example, the wireless antenna array 250 may be configured as a grid of beams (GoB) which transmits a plurality of beams in different directions, angles, frequencies, and/or with different delays.

The network node 200 may communicate with a core network (e.g., backend network, backhaul network, backbone network, data network, or another network) of the wireless communication network (e.g., core network 100) via a core network interface 240. The core network interface 240 may be a wired and/or wireless network interface and may enable the network node 200 to communicate and/or transmit data to and from to network devices on the backend network, such as a core network gateway (not illustrated), a data network (e.g., data network 105), such as the Internet, intranets, wide area networks, telephone networks, or VoIP networks.

While FIG. 2 depicts an example embodiment of a network node 200 which may operate as a network node, a network function, and/or a RAN node, the example embodiments are not limited thereto, and may include additional and/or alternative architectures that may be suitable for the purposes demonstrated. For example, the functionality of the network node 200 may be divided among a plurality of physical, logical, and/or virtual network elements, such as a centralized unit (CU), a distributed unit (DU), a remote radio head (RRH), and/or a remote radio unit (RRU). Additionally, the network node 200 may operate in standalone (SA) mode and/or non-standalone (NSA) mode using interfaces (not illustrated), such as X2 or Xn, between the network node 200 and other RAN nodes of the wireless network, interfaces such as S1 or NG, between the network node 200 and the core network (e.g., core network 100), interfaces between network functions of the network node 200 operating in a distributed and/or virtual RAN mode (not illustrated), such as F1 or E1, and/or interfaces between the physical layer (e.g., a baseband unit) and the radio layer (e.g., a RRH, core network interface 240) (not illustrated), such as Common Public Radio Interface (CPRI) or enhanced CPRI (eCPRI).

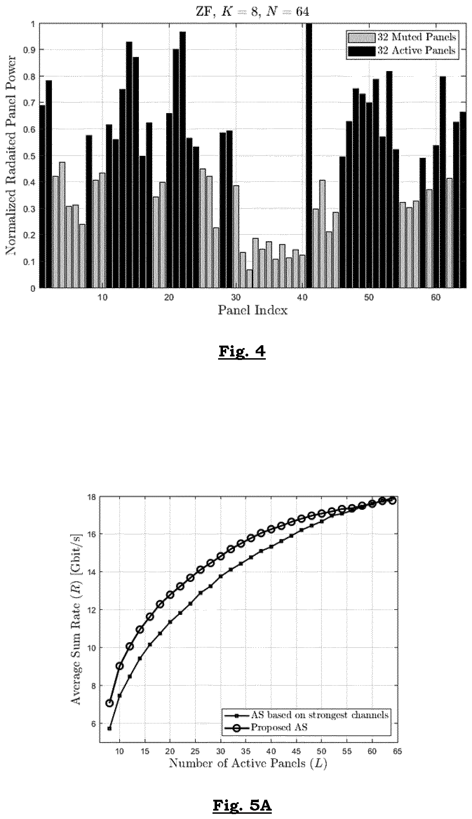

FIG. 3 illustrates an example flowchart illustrating a method of performing antenna and/or panel muting according to some example embodiments. FIG. 4 illustrates an example graph illustrating the selection of the subset of antennas and/or panels according to at least one example embodiment.

According to at least one example embodiment, in operation S301, a network node, such as the RAN node 110 of FIG. 1, may initiate an antenna muting and/or antenna selection process by constructing, generating, calculating, and/or determining an initial precoder designed for at least one high-dimensional channel. For example, the initial precoder may have interference management capabilities and/or may take inter-user/layer interference into account. According to at least one example embodiment, the initial precoder may be constructed and/or designed based on any type of zero forcing (ZF), regularized ZF (RZF), weighted minimum mean-square error (WMMSE), eigen ZF (EZF), etc. For example, the initial precoder may be constructed and/or designed based on the high-dimensions channel of the full set of antennas and/or panels.

The initial precoder may be constructed based on an initial channel matrix associated with the full set of antennas of the RAN node 110 and initial and/or estimated signal quality measurements associated with the full set of antennas of the RAN node 110. The RAN node 110 may calculate, determine, and/or generate an initial high-dimensional channel matrix $\boldsymbol{H}$ for a desired transmission time slot based on the initial inputs, $N$ and $K$, and the initial and/or estimated signal quality measurements for each antenna of the RAN node 110, as illustrated in Equation (1), such that:

$$\boldsymbol{H} \in \mathbb{C}^{K \times N}, \tag{1}$$

wherein $N$ is representative of the total number of antennas or panels of the RAN node 110 (and/or the total number of antennas in the distributed MIMO system); and $K$ is representative of the total number of UE devices connected to the RAN node 110 and/or the MIMO system.

Additionally, according to at least one example embodiment, the signal quality measurements may include at least one of channel state information (CSI) associated with each of the plurality of antennas, signal interference to noise ratio (SINR) measurements associated with each of the plurality of antennas, channel quality information (CQI) associated with each of the plurality of antennas, reference signal received power (RSRP) measurements associated with each of the plurality of antennas, reference signal received quality (RSRQ) measurements associated with each of the plurality of antennas, and/or received signal strength indication (RSSI) measurements associated with each of the plurality of antennas.

Using the initial high-dimensional channel matrix $\boldsymbol{H}$, the RAN node 110 may construct, generate, and/or determine the initial precoder $\boldsymbol{V_{HD}}$ as shown in Equation (2), such that

$$V_{HD} = H^H (HH^H)^{-1} P^{1/2}, \tag{2}$$

wherein $\boldsymbol{P}$ = a desired, configured, and/or set power allocation for the RAN node 110. According to the example embodiments, $\boldsymbol{P}$ may be provided as an initial input and/or network setting with, e.g., $N$ and $K$. In another example embodiment, $\boldsymbol{P}$ may be designed based on the high-dimensional channel matrix $\boldsymbol{H}$ and/or an optimization objective (e.g., sum rate, weighted sum rate, and so on). For example, $\boldsymbol{P}$ may be designed based on the high-dimensional channel matrix $\boldsymbol{H}$ using the water-filling algorithm to maximize the sum rate or weighted sum rate.

According to at least one example embodiment, the initial precoder is a zero-forcing (ZF) digital precoder, but the example embodiments are not limited thereto, and for example other digital and/or hybrid digital-analog precoder that are capable of inter-user and/or inter-layer interference management may be used, such as a regularized ZF (RZF) digital precoder, a weighted minimum mean-square error (WMMSE) digital precoder, eigen ZF (EZF) digital precoder, a fully-connected (FC)-phase shifter (PS) hybrid precoder, and/or a partially-connected (PC)-PS hybrid precoder, and so on.

According to some example embodiments, the RAN node 110 may construct the initial precoder in response to a desired antenna selection network condition, such as a decrease in network load being less than a threshold network load value (e.g., a peak network load value), a decrease in network traffic to a value that is less than a threshold network traffic value (e.g., a peak network traffic value), a number of active UE device connections being less than a threshold active connection value. Additionally, the RAN node 110 may initiate the antenna selection process in response to receiving a command from the network operator, in response to a the expected network load and/or network traffic for a desired date/time period (e.g., desired time periods of a day and/or days of the week, days of the month, months of the year, and so on) where network load and/or network traffic is expected to be less than a predefined peak network load level and/or a predefined peak network traffic level. Further, the antenna selection process may be initiated based on other factors, such as a desire to reduce energy consumption of the RAN node 110.

In operation S302, the RAN node 110 may calculate the antenna radiated power for each of the $N$ antennas included in the initial precoder.

For example, the antenna radiated power may be calculated using Equation (3), such that

$$\{\|v_1\|^2, \|v_2\|^2, \dots, \|v_N\|^2\}, \tag{3}$$

wherein $\boldsymbol{V_{HD}} = [\boldsymbol{v_1}, \boldsymbol{v_2}, \dots, \boldsymbol{v_N}]^T$ is the initial high dimensional precoder, and $\boldsymbol{v_n}$ is the precoding vector corresponding to the n-th antenna.

In operation S303, the RAN node 110 may select a subset of the antennas of the RAN node 110 (and/or the MIMO system) based on the calculated antenna radiated power of the initial precoder. More specifically, the RAN node 110 may obtain, receive, and/or be configured with a value $L$ which represents the desired number of selected, active, and/or non-muted antennas for data transmission at the RAN node 110 and/or the MIMO system. According to some example embodiments, $L$ may be set and/or configured as desired by the network operator, may be configured based on network QoS settings, energy efficiency goals, or other one or more criteria.

For example, the RAN node 110 may select the subset of antennas $\mathcal{L}$ from the full set of antennas $N$ of the RAN node 110 (and/or the MIMO system) by selecting the $L$ antennas having the highest radiated power from the initial precoder $\boldsymbol{V_{HD}}$ as shown in Equation (4), such that

$$\mathcal{L} = \operatorname{argmax}_L \{\|v_1\|^2, \|v_2\|^2, \dots, \|v_N\|^2\}, \tag{4}$$

wherein $\operatorname{argmax}_L$ identifies the $L$ highest values from the argument set, and $L < N$.

Now referring to FIG. 4, FIG. 4 is a chart illustrating the calculated antenna radiated power for an example initial ZF precoder. In FIG. 4, it is assumed that $N$ is 64 antennas, $K$ is 8 single-antenna users, and $L$ is 32 (thirty two) antennas of the 64 (sixty four) antennas, but the example embodiments are not limited thereto, and other values may be used for $N$, $K$, and/or $L$.

As illustrated in FIG. 4, the RAN node 110 may select the 32 (thirty two) antennas with the highest calculated radiated power (e.g., normalized radiated power) as the active antennas for data transmission by the RAN node 110, and the remaining 32 (thirty two) antennas (e.g., $N - L$) may be muted, powered down, and/or disabled.

Returning now to FIG. 3, in operation S304, the RAN node 110 may generate, construct, and/or determine a transmission (TX) precoder (e.g., second precoder and/or actual precoder) for data transmission based on the subset of selected antennas $\mathcal{L}$. More specifically, the RAN node 110 may generate the transmission precoder, e.g., a ZF precoder, a RZF precoder, a WMMSE precoder, and so on, for the subset of selected antennas $\mathcal{L}$ for use in data transmission with at least one UE device, e.g., UE device 120 and/or 130.

In the event that the RAN node 110 transmits on multiple carriers (e.g., multiple carriers and/or multiple bands and/or multiple subbands and/or multiple sub-carriers), the RAN node 110 may generate a plurality of transmission precoders for each of the carriers.

Additionally, according to some example embodiments, the RAN node 110 may perform operations S301 to S304 within a per-channel coherence time period, but the example embodiments are not limited thereto. In some other example embodiments, the RAN node 110 may perform operations S301, S302, and S304 for each of the carriers. For example, the operation S303 may comprise selecting a common $L$ antennas/panels for all or a subset of the multiple carriers based on the radiated powers of the plurality of transmission precoders for each of the carriers. For example, the operation S303 may comprise selecting a common $L$ antennas/panels for all or a subset of the multiple carriers based on the largest radiated powers of the plurality of transmission precoders for each of the carriers. For example, the operation S303 may comprise selecting a common $L$ antennas/panels for all or a subset of the multiple carriers based on the largest aggregated radiated powers of the plurality of transmission precoders for each of the carriers. For example, the operation S303 may comprise selecting a common $L$ antennas/panels for all or a subset of the multiple carriers based on an aggregating function of the selected panels based on the transmission precoder for each of the carriers. For example, the aggregated function may be based on majority voting and/or weighted majority voting.

FIGS. 5A to 5E are example comparison graphs illustrating the performance of at least one example embodiment in comparison to conventional antenna selection algorithms.

FIG. 5A illustrates the performance of at least one example embodiment in comparison to a conventional heuristic-based antenna selection algorithm wherein a set number of the strongest channels are used. As illustrated in FIG. 5A, the y-axis of the graph illustrates the average sum rate for each of the antenna selection algorithms and the x-axis of the graph illustrates the number of active antennas for each of the antenna selection algorithms. As illustrated in FIG. 5A, the antenna selection algorithm of the example embodiments provides greater average sum rate (e.g., greater achieved spectral efficiency) than the conventional heuristic-based antenna selection algorithm due in part to the consideration of the channel compatibilities and/or orthogonality and/or inter-user interference and/or inter-layer interference for antenna selection.

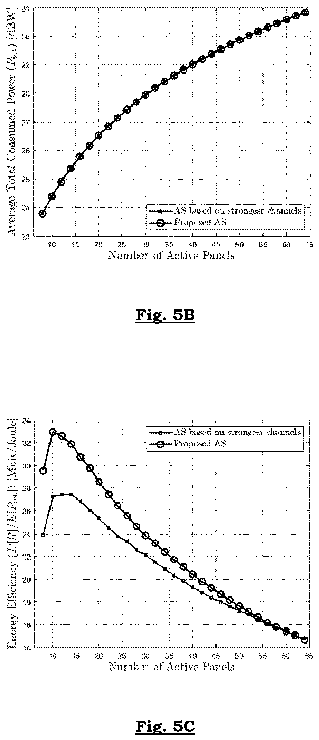

FIG. 5B illustrates a comparison of the average total consumed power (y-axis) versus the number of active panels (x-axis) for the two antenna selection algorithms. FIG. 5C illustrates a comparison of the energy efficiency (y-axis) versus the number of active panels (x-axis) for the two antenna selection algorithms. As illustrated in FIGS. 5B and 5C, the power consumption of the antenna selection algorithm of the example embodiments is the same as the power consumption of the conventional heuristic-based antenna selection algorithm, but the spectral efficiency of the antenna selection algorithm of the example embodiments is higher than the spectral efficiency of the conventional antenna selection algorithm, resulting in improved energy efficiency.

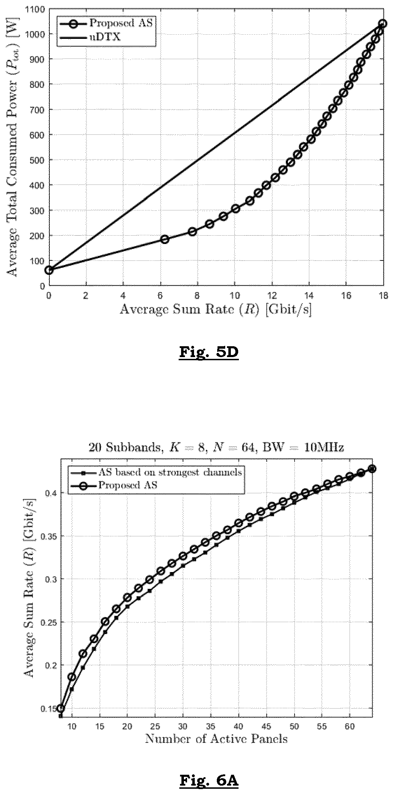

FIG. 5D is a comparison of the antenna selection algorithm of the example embodiments and a conventional micro-discontinuous transmission (uDTX) antenna selection algorithm, wherein all of the antennas of a RAN node and/or MIMO system are put into sleep mode for a fraction of time. In FIG. 5D, the y-axis represents the average total consumed power of the two antenna selection methods and the x-axis represents the average sum rate (e.g., the achieved spectral efficiency) of the two antenna selection methods. As illustrated in FIG. 5D, the uDTX method provides a linear decrease in power consumption by increasing the time allocated to sleep mode for the antennas, but at the cost of linearly decreasing the spectral efficiency. In contrast, the antenna selection method of the example embodiments provides a convex curve below the linear curve of the uDTX method, thereby showing that the reduction of active antennas (e.g., the increase in muted antennas) in the at least one example embodiment results in a linear decrease in power consumption, but the spectral efficiency decreases at a slower rate than the uDTX method. Consequently, in view of a slower decrease in the spectral efficiency demonstrated by the antenna selection method of the example embodiments, it may be concluded that the antenna selection method of the example embodiments is more energy efficient than, for example, the uDTX method.

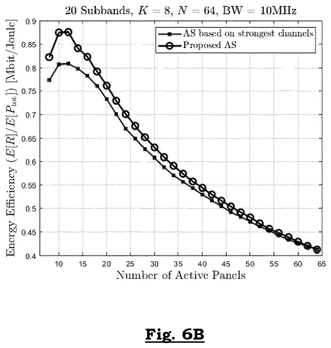

FIGS. 6A and 6B illustrate example graphs illustrating the performance of at least one example embodiment in comparison to additional conventional antenna selection algorithms with respect to transmissions over multiple subbands. More specifically, FIGS. 6A and 6B illustrate the performances of the antenna selection algorithm of at least one example embodiment and a conventional strongest channels antenna selection algorithm when used with multiple subcarriers. In FIGS. 6A and 6B, the performance of the antenna selection algorithms are plotted using 20 (twenty) subbands (e.g., subcarriers) from a 10-MHz frequency spectrum, but the example embodiments are not limited thereto.

FIG. 6A illustrates the average sum rate (y-axis) versus the number of active panels (x-axis). As illustrated in FIG. 6A, the antenna selection algorithm of at least one example embodiment provides increased spectral efficiency over the strongest channels antenna selection algorithm because the antenna selection algorithm according to at least one example embodiment selects an improved and/or better subset of antennas/panels from the plurality of antennas/panels of the antenna/panel array by calculating and/or determining the channel compatibility and/or channel orthogonality of different users, including factors such as inter-user interference, over the conventional strongest channels antenna selection algorithm. Additionally, in FIG. 6B, the energy efficiency (y-axis) of the three antenna selection algorithms are plotted against the number of active panels (x-axis). As illustrated in FIG. 6B, the antenna selection algorithm of at least one example embodiment provides increased energy efficiency over the strongest channels antenna selection algorithm because the transmission precoder generated by the antenna selection algorithm of at least one example embodiment consumes the same, or substantially similar, amount of power as the conventional strongest channels antenna selection algorithm, but the spectral efficiency of the antenna selection algorithm of the example embodiments is higher than the spectral efficiency of the conventional antenna selection algorithm, resulting in improved energy efficiency.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Various example embodiments will now be described more fully with reference to the accompanying drawings in which some example embodiments are illustrated.

Detailed example embodiments are disclosed herein. However, specific structural and functional details disclosed herein are merely representative for purposes of describing the example embodiments. The example embodiments may, however, be embodied in many alternate forms and should not be construed as limited to only the example embodiments configured forth herein.

It will be understood that, although the terms first, second, and so on may be used herein to describe various elements, these elements should not be limited by these terms. These terms are only used to distinguish one element from another. For example, a first element could be termed a second element, and, similarly, a second element could be termed a first element, without departing from the scope of the example embodiments. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent").

The terminology used herein is for the purpose of describing particular embodiments only and is not intended to be limiting of the example embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures illustrated in succession may in fact be executed substantially concurrently or may sometimes be executed in the reverse order, depending upon the functionality/acts involved.

Specific details are provided in the following description to provide a thorough understanding of the example embodiments. However, it will be understood by one of ordinary skill in the art that example embodiments may be practiced without these specific details. For example, systems may be illustrated in block diagrams in order not to obscure the example embodiments in unnecessary detail. In other instances, well-known processes, structures and techniques may be illustrated without unnecessary detail in order to avoid obscuring example embodiments.

Also, it is noted that example embodiments may be described as a process depicted as a flowchart, a flow diagram, a data flow diagram, a structure diagram, or a block diagram. Although a flowchart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, a function, a procedure, a subroutine, and/or a subprogram. When a process corresponds to a function, its termination may correspond to a return of the function to the calling function or the main function.

Moreover, as disclosed herein, the term "memory" may represent one or more devices for storing data, including random access memory (RAM), magnetic RAM, core memory, and/or other machine readable mediums for storing information. The term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" may include, but is not limited to, portable or fixed storage devices, optical storage devices, wireless channels, and various other mediums capable of storing, containing or carrying instruction(s) and/or data.

Furthermore, example embodiments may be implemented by hardware circuitry and/or software, firmware, middleware, microcode, and/or hardware description languages, in combination with hardware (e.g., software executed by hardware). When implemented in software, firmware, middleware or microcode, the program code or code segments to perform the desired tasks may be stored in a machine or computer readable medium such as a non-transitory computer storage medium, and loaded onto one or more processors to perform the desired tasks.

A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, and/or data, may be passed, forwarded, or transmitted via any suitable means including memory sharing, message passing, token passing, and/or network transmission.

As used in this application, the term "circuitry" and/or "hardware circuitry" may refer to one or more or all of the following: (a) hardware-only circuit implementation (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s)), software, and memory(ies) that work together to cause an apparatus, such as a mobile phone or server, to perform various functions); and (c) hardware circuit(s) and/or processor(s), such as microprocessor(s) or a portion of a microprocessor(s), that requires software (e.g., firmware) for operation, but the software may not be present when it is not needed for operation. For example, the circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, or an application-specific integrated circuit (ASIC).

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

While the various example embodiments of the present disclosure are discussed in connection with the 5G wireless communication standard for the sake of clarity and convenience, the example embodiments are not limited thereto, and one of ordinary skill in the art would recognize the example embodiments may be applicable to other wireless communication standards, such as the 4G standard, a Wi-Fi standard, a future 6G standard, a future 7G standard, and so on.

**Claims**

1. A network node, comprising:
   means for performing,

   generating an initial precoder for a plurality of antennas;
   determining antenna radiated power for each of the plurality of antennas based on the initial precoder;
   selecting a subset of antennas from the plurality of antennas based on the determined antenna radiated power;
   generating at least one transmission precoder for at least one selected antenna of the selected subset of antennas; and
   performing communication with at least one user equipment (UE) device using the at least one transmission precoder and the at least one selected antenna of the selected subset of antennas.

2. The network node of claim 1, wherein the means are further configured to perform:

obtaining signal quality measurements associated with the plurality of antennas;
generating an initial channel matrix corresponding to the plurality of antennas based on the obtained signal measurements; and
generating the initial precoder based on the initial channel matrix.

3. The network node of any one of claims 1 and 2, wherein the means are further configured to perform:

obtaining a number of total antennas associated with the network node;
obtaining a number of active antennas associated with the network node;
obtaining a number of UE devices connected to the network node; and
generating the initial channel matrix based on the obtained signal quality measurements, the number of total antennas, the number of active antennas, and the number of UE devices.

4. The network node of any one of claims 1 to 3, wherein the means are further configured to generate the at least one transmission precoder for the at least one selected antenna of the selected subset of antennas by:

determining effective signal quality measurements associated with each selected antenna of the selected subset of antennas;
generating a subset channel matrix based on the determined effective signal quality measurements; and
generating the at least one transmission precoder for the at least one selected antenna based on the subset channel matrix.

5. The network node of any one of claims 1 to 4, wherein the means are further configured to select the subset of antennas from the plurality of antennas by:

selecting a desired number of antennas from the plurality of antennas as the selected subset of antennas based on the determined antenna radiated power of the plurality of antennas,
wherein the desired number of antennas is a configurable network setting.

6. The network node of any one of claims 1 to 5, wherein the initial precoder and the at least one transmission precoder are digital precoders or hybrid analog-digital precoders.

7. The network node of any one of claims 1 to 6, wherein the means are further configured to perform:
communicating with the at least one UE device using a plurality of carriers or a plurality of subcarriers;

generating the plurality of initial precoders for the plurality of antennas for each of the plurality of carriers or the plurality of subcarriers;
determining the antenna radiated power for each of the plurality of antennas based on the plurality of initial precoders;
selecting a desired number of antennas from the plurality of antennas as the selected subset of antennas for at least one carrier of the plurality of carriers or at least one subcarrier of the plurality of subcarriers based on the determined antenna radiated power; and
generating a plurality of transmission precoders for the at least one selected antenna of the selected subset of antennas.

8. The network node of any one of claims 1 to 7, wherein the means are further configured to perform:
generating the at least one transmission precoder within a per channel coherence time.

9. The network node of any preceding claims, wherein the means comprises:

memory having computer readable instructions stored thereon; and
processing circuitry configured to execute the computer readable instructions to cause the performance of the network node.

10. A method of operating a network node comprising:

generating an initial precoder for a plurality of antennas;
determining antenna radiated power for each of the plurality of antennas based on the initial precoder;

selecting a subset of antennas from the plurality of antennas based on the determined antenna radiated power;

generating at least one transmission precoder for at least one selected antenna of the selected subset of antennas; and

performing communication with at least one user equipment (UE) device using the at least one transmission precoder and the at least one selected antenna of the selected subset of antennas.

11. The method of claim 10, wherein the method further comprises:

obtaining signal quality measurements associated with the plurality of antennas;

generating an initial channel matrix corresponding to the plurality of antennas based on the obtained signal measurements; and

generating the initial precoder based on the initial channel matrix.

12. The method of any one of claims 10 to 11, wherein the method further comprises:

obtaining a number of total antennas associated with the network node;

obtaining a number of active antennas associated with the network node;

obtaining a number of UE devices connected to the network node; and

generating the initial channel matrix based on the obtained signal quality measurements, the number of total antennas, the number of active antennas, and the number of UE devices.

13. The method of any one of claims 10 to 12, wherein the generating the at least one transmission precoder for the at least one selected antenna of the selected subset of antennas further includes:

determining effective signal quality measurements associated with each selected antenna of the selected subset of antennas;

generating a subset channel matrix based on the determined effective signal quality measurements; and

generating the at least one transmission precoder for the at least one selected antenna based on the subset channel matrix.

14. The method of any one of claims 10 to 13, wherein the selecting the subset of antennas from the plurality of antennas further includes:
selecting a desired number of antennas from the plurality of antennas as the selected subset of antennas based on the determined antenna radiated power of the plurality of antennas.

15. A non-transitory computer readable medium having computer readable instructions stored thereon, which when executed by processing circuitry, cause the processing circuitry to:

generate an initial precoder for a plurality of antennas;

determine antenna radiated power for each of the plurality of antennas based on the initial precoder;

select a subset of antennas from the plurality of antennas based on the determined antenna radiated power;

generate at least one transmission precoder for at least one selected antenna of the selected subset of antennas; and

perform communication with at least one user equipment (UE) device using the at least one transmission precoder and the at least one selected antenna of the selected subset of antennas.

**Fig. 1**

**200**

Processing Circuitry
210

**220**

Core Network
Interface
240

Wireless Antenna
Array 250

Memory
230

**Fig. 2**

Antenna/Panel Selection

S301) Construct an initial precoder for the high-dimensional channel

S302) Calculate $N$ antenna/panel radiated powers for the high-dimensional initial precoder

S303) Select $L < N$ antennas/panels corresponding to the largest radiated powers

S304) Generate a TX precoder for the selected $L$ data antennas/panels transmission

CSI

$H$

**Fig. 3**

**Fig. 4**

**Fig. 5A**

**Fig. 5B**

**Fig. 5C**

**Fig. 5D**

**Fig. 6A**

**Fig. 6B**

Europäisches Patentamt
European Patent Office
Office européen des brevets

# EUROPEAN SEARCH REPORT

Application Number

EP 23 19 2181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/210892 A1 (SHANY YARON [IL] ET AL) 1 September 2011 (2011-09-01) | 1,3, 6-10,12, 15 | INV. H04B7/0456 H04B7/06 |
| Y | * paragraphs [0039], [0071], [0128], [0139]; figures 1,5,10,11 * | 2,4,5, 11,13,14 | H04B7/08 |
| Y | US 2019/239233 A1 (RYU JUNG [US] ET AL) 1 August 2019 (2019-08-01) * paragraphs [0050] – [0051], [0073] * | 2,4,5, 11,13,14 | |

TECHNICAL FIELDS SEARCHED (IPC)

H04B

The present search report has been drawn up for all claims

| Place of search | Date of completion of the search | Examiner |
|---|---|---|
| Munich | 29 January 2024 | Tanco Sánchez, Mario |

EPO FORM 1503 03.82 (P04C01)

## ANNEX TO THE EUROPEAN SEARCH REPORT
## ON EUROPEAN PATENT APPLICATION NO.

EP 23 19 2181

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | | Publication date | Patent family member(s) | | Publication date |
|---|---|---|---|---|---|
| US 2011210892 | A1 | 01-09-2011 | EP | 2540127 A1 | 02-01-2013 |
| | | | US | 2011210892 A1 | 01-09-2011 |
| | | | US | 2012286996 A1 | 15-11-2012 |
| | | | US | 2013040580 A1 | 14-02-2013 |
| | | | US | 2014294113 A1 | 02-10-2014 |
| | | | WO | 2011104718 A1 | 01-09-2011 |
| US 2019239233 | A1 | 01-08-2019 | CN | 111684735 A | 18-09-2020 |
| | | | EP | 3747133 A1 | 09-12-2020 |
| | | | US | 2019239233 A1 | 01-08-2019 |
| | | | WO | 2019147471 A1 | 01-08-2019 |

EPO FORM P0459

For more details about this annex : see Official Journal of the European Patent Office, No. 12/82